# EUROPEAN PATENT APPLICATION

(11) **EP 4 345 676 A1**
(43) Date of publication of application: **03.04.2024**
(21) Application number: 22198367.9
(22) Date of filing: 28.09.2022
(51) Int. Cl.: G06F 30/20, G06F 30/12, G06F 111/20, G06F 119/06, G06F 113/04

(54) **METHOD FOR DESIGNING ENERGY SYSTEMS**

(71) Applicant: Siemens Aktiengesellschaft, 80333 München (DE)
(72) Inventor: Liebig, Veronika, 80339 München (DE); Lee, Benjamin, 90409 Nürnberg (DE); Majewski, Kurt, 81541 München (DE); Seydenschwanz, Martin, 81541 München (DE); Thiem, Sebastian, 91413 Neustadt an der Aisch (DE); Wiles, Jeremy Ralph, 38073 Vigo Cavedine (IT)
(74) Representative: Siemens Patent Attorneys

(57) **Abstract**

A method for designing an energy system including a plurality of components is provided. An abstract structure of the energy system is determined based on a pre-defined abstract model for each one of the plurality of components. One or more configurations of a system sizing associated with the energy system are determined. Each one of the one or more configurations of the system sizing is determined based on the abstract structure and a set of requirements associated with the abstract structure of the energy system. For each of at least one of the one or more configurations of the system sizing, a respective complex structure of the energy system is determined based on a pre-defined complex model for each one of the plurality of components and the abstract structure, and a performance of the respective complex structure of the energy system is determined based on a set of requirements associated with the energy system. The energy system is designed based on respective performances determined for the at least one of the one or more configurations of the system sizing.

## Description

### TECHNICAL FIELD

Various examples of the disclosure generally pertain to a method for designing an energy system including a plurality of components. Various examples of the disclosure specifically pertain to designing the energy system based on a system sizing determined based on an abstract structure of the energy system.

### BACKGROUND

Energy systems, e.g., power grids, power plants, energy storage systems, etc. can be complex and their performance and/or behavior can be impacted by the parameters of and/or operation of individual components forming the energy system.

Exemplary components include generators, gas turbines, batteries, photovoltaic power sources, etc. Exemplary components also include loads, e.g., electrical loads, thermal loads, or hydrogen loads.

The performance of an energy system and/or its components may be needed to simulate over its lifetime (e.g., 20 years). An output of the simulation can be used to evaluate the energy system and/or its components according to lifecycle operating costs and technical feasibility (e.g. blackouts, unmet load, total exports). Accordingly, an appropriate design, e.g., system sizing and/or architecture, of the energy system can be obtained.

When designing an energy system, e.g., distributed energy resources (DER) systems, there are many different tools, each with its own level of abstraction and focus. A designer has to manage all of these tools in order to properly size and analyze an energy system, which is a lot of work and can lead to mistakes.

For example, an approach is to do an abstract sizing first using very simple models of components with the intent to get a first estimate for the system sizing and architecture of the energy system. Then, engineers would rebuild the energy system with a more detailed tool. Such an approach may waste resources in designing the energy system and increase the chances of inconsistency in the energy system.

### SUMMARY

Therefore, a need exists for advanced techniques for designing an energy system. Specifically, a need exists for designing an energy system efficiently and precisely. A need exists for an appropriate design of an energy system facilitating the performance of the energy system.

This need is met by the features of the independent claims. The features of the dependent claims define embodiments.

A computer-implemented method for designing an energy system is provided. The energy system comprises a plurality of components. The method comprises determining an abstract structure of the energy system based on a pre-defined abstract model for each one of the plurality of components. The abstract model for each one of the plurality of components comprises at least one abstract parameter with respect to at least one technical parameter characterizing the respective component. The method further comprises determining one or more configurations of a system sizing associated with the energy system. Each one of the one or more configurations of the system sizing is determined based on the abstract structure and on a set of requirements associated with the abstract structure of the energy system. The method further comprises, for each of at least one of the one or more configurations of the system sizing, determining a respective complex structure of the energy system based on a pre-defined complex model for each one of the plurality of components and on the abstract structure, and determining a performance of the respective complex structure of the energy system based on a set of requirements associated with the energy system. The complex model for each one of the plurality of components comprises the at least one technical parameter characterizing the respective component. The method also comprises designing the energy system based on respective performances determined for the at least one of the one or more configurations of the system sizing.

A computing device comprising a processor and a memory is provided. Upon loading and executing program code from the memory, the processor is configured to perform a method for designing an energy system. The energy system comprises a plurality of components. The method comprises determining an abstract structure of the energy system based on a pre-defined abstract model for each one of the plurality of components. The abstract model for each one of the plurality of components comprises at least one abstract parameter with respect to at least one technical parameter characterizing the respective component. The method further comprises determining one or more configurations of a system sizing associated with the energy system. Each one of the one or more configurations of the system sizing is determined based on the abstract structure and on a set of requirements associated with the abstract structure of the energy system. The method further comprises, for each of at least one of the one or more configurations of the system sizing, determining a respective complex structure of the energy system based on a pre-defined complex model for each one of the plurality of components and on the abstract structure, and determining a performance of the respective complex structure of the energy system based on a set of requirements associated with the energy system. The complex model for each one of the plurality of components comprises the at least one technical parameter characterizing the respective component. The method also comprises designing the energy system based on respective performances determined for the at least one of the one or more configurations of the system sizing.

A computer program product or a computer program or a computer-readable storage medium including program code is provided. The program code can be executed by at least one processor. Executing the program code causes the at least one processor to perform a method for designing an energy system. The energy system comprises a plurality of components. The method comprises determining an abstract structure of the energy system based on a pre-defined abstract model for each one of the plurality of components. The abstract model for each one of the plurality of components comprises at least one abstract parameter with respect to at least one technical parameter characterizing the respective component. The method further comprises determining one or more configurations of a system sizing associated with the energy system. Each one of the one or more configurations of the system sizing is determined based on the abstract structure and on a set of requirements associated with the abstract structure of the energy system. The method further comprises, for each of at least one of the one or more configurations of the system sizing, determining a respective complex structure of the energy system based on a pre-defined complex model for each one of the plurality of components and on the abstract structure, and determining a performance of the respective complex structure of the energy system based on a set of requirements associated with the energy system. The complex model for each one of the plurality of components comprises the at least one technical parameter characterizing the respective component. The method also comprises designing the energy system based on respective performances determined for the at least one of the one or more configurations of the system sizing.

It is to be understood that the features mentioned above and those yet to be explained below may be used not only in the respective combinations indicated, but also in other combinations or in isolation without departing from the scope of the invention.

### BRIEF DESCRIPTION OF THE DRAWINGS

- FIG. 1: schematically illustrates an exemplary energy system according to various examples.
- FIG. 2: schematically illustrates a block diagram of a computing device according to various examples.
- FIG. 3: is a flowchart of a method according to various examples.

### DETAILED DESCRIPTION OF THE DRAWINGS

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which coact with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Various examples of the disclosure generally pertain to a method for designing an energy system including a plurality of components. An abstract structure of the energy system is determined based on a pre-defined abstract model for each one of the plurality of components. One or more configurations of a system sizing associated with the energy system are determined. Each one of the one or more configurations of the system sizing is determined based on the abstract structure and a set of requirements associated with the abstract structure of the energy system. For each of at least one of the one or more configurations of the system sizing, a respective complex structure of the energy system is determined based on a pre-defined complex model for each one of the plurality of components and the abstract structure, and a performance of the respective complex structure of the energy system is determined based on a set of requirements associated with the energy system. The abstract model for each one of the plurality of components comprises at least one abstract parameter with respect to at least one technical parameter characterizing the respective component. The complex model for each one of the plurality of components comprises the at least one technical parameter characterizing the respective component. The energy system is designed based on respective performances determined for the at least one of the one or more configuration of the system sizing.

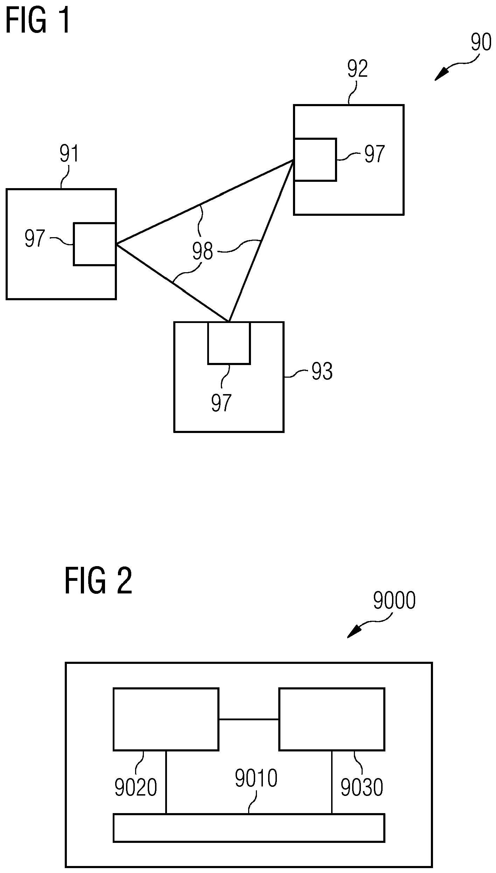

An exemplary energy system 90 is illustrated in FIG. 1. The energy system 90 includes multiple components 91-93.

These components 91-93 are connected by energy exchange lines 98 via respective interfaces 97. Energy can be output and/or input via the interfaces 97. There can also be an energy loss at each component 91-93.

As a general rule, various kinds and types of energy systems can be subject to the techniques disclosed herein, e.g., electrical power grids, power plants, hydrogen fuel cells, photovoltaic systems, etc. Depending on the type of the energy system, the energy exchange lines 98 can be implemented differently, e.g., as electrical wiring to convey electrical power, or as fuel lines to convey, e.g., hydrogen or gas or liquid fuel.

FIG. 2 is a block diagram of a computing device 9000 according to various examples. The computing device 9000 may comprise a processor 9020, a memory 9030, and an input/output interface 9010.

According to various examples, it is possible to output control data via the input/output interface 9010 to thereby control configurations of components 91-93 of an energy system such as the energy system 90. Also, a design process of such an energy system and/or of such components could be controlled.

The input/output interface 9010 may include a human machine interface via which a user interface can be provided to a user, e.g., an engineer. The user interface could be, e.g., a graphical user interface such as a web-based user interface.

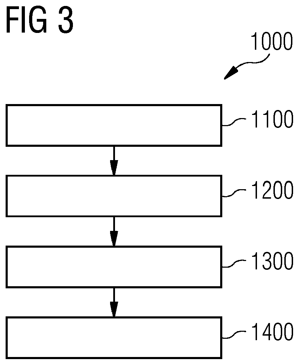

The processor 9020 is configured to load program code from the memory 9030 and execute the program code. Upon executing the program code, the processor 9020 performs techniques as disclosed herein. For instance, the processor 9020 can perform techniques as disclosed in connection with FIG. 3.

FIG. 3 is a flowchart of a method 1000 according to various examples. The method 1000 of FIG. 3 pertains to designing an energy system including a plurality of components, e.g., the energy system 90 of FIG. 1. For example, the method 1000 may be executed by a computing device such as the computing device 9000 of FIG. 2. The method 1000 may be executed by the processor 9020 upon loading program code from the memory 9030 and upon executing the program code. Details of the method 1000 are described in the following.

At block 1100: determining an abstract structure of the energy system based on a pre-defined abstract model for each one of the plurality of components.

The abstract model for each one of the plurality of components comprises at least one abstract parameter with respect to at least one technical parameter characterizing the respective component.

For example, each of the components 91-93 of the energy system 90 may comprise a pre-defined abstract model, and an abstract structure of the energy system 90 can be determined based on the corresponding abstract model of each of the components 91-93. For example, the abstract structure of the energy system 90 can be built using the corresponding abstract model of the components 91-93. Further, the energy exchange lines 98 may also comprise a pre-defined abstract model. I.e., the abstract structure of the energy system 90 may be built by connecting the abstract model of individual components 91-93 via the abstract model of the energy exchange lines 98.

According to various examples, the abstract model may be a model that contains an abstraction or abstractions of the realistic component. For example, the abstract model may be generated using abstract model theory. The parameterization of the abstract model may be predefined to represent a realistic component. The realistic component may be characterized using at least one technical parameter associated with the realistic component.

For example, the abstract model of a generator may comprise an abstract parameter, i.e., an efficiency term, which may be a constant or represented by a curve. Such an efficiency term may be related to at least one technical parameter characterizing the generator, which may comprise fuel consumption, electrical production, a derating factor, and time-based efficiency degradations. For example, the efficiency term associated with the abstract model of the generator may be determined or represented using a nonlinear curve describing the relationship between fuel consumption and electrical production as well as a derating factor, and time-based efficiency degradations. I.e., the abstract parameter may be a highlevel parameter specifying an abstraction of a technical parameter or a subset of technical parameters on a physics level and can therefore be used to encapsulate technical details.

In general, technical parameters may refer to technical restrictive conditions for a corresponding component. For example, technical parameters of a generator may comprise copper size, winding design, power for the magnet, voltage, a power factor, etc. The technical parameters of a generator may further comprise fuel efficiency curve, minimum on time, ramping speed, synchronization time, capital costs, operating costs.

At block 1200: determining one or more configurations of a system sizing associated with the energy system.

Each one of the one or more configurations of the system sizing is determined based on the abstract structure and on a set of requirements associated with the abstract structure of the energy system.

In general, system sizing may involve determining/calculating technical parameters of each component of the energy system and matching a configuration of system sizing with a set of requirements associated with the abstract structure of the energy system.

According to various examples, a set of requirements associated with the abstract structure may comprise at least one of maximum/minimum capital expenditures, maximum/minimum operating expenditures, maximum/minimum power generation, maximum/minimum component size, maximum/minimum carbon footprint, maximum/minimum return on investment, maximum/minimum internal rate of return, balances of powers/allowed blackouts, and so on.

According to various examples, based on the abstract structure of the energy system and the associated abstract parameters of each component, a combined optimization problem can be solved that could identify the optimal system sizing for a particular objective function. For example, said determining of each of the one or more configurations of the system sizing may comprise: determining an objective function with respect to the respective abstract parameters of corresponding abstract models, and determining, using an optimization approach, the respective configuration of the system sizing based on the respective objective function and on the set of requirements associated with the abstract structure of the energy system.

Optionally or additionally, multiple objective functions with respect to the respective abstract parameters of corresponding abstract models may be determined, e.g., by varying weights between lifecycle cost, capital expenditures, environmental impact, and/or embedded energy. Then, the optimization problem may be solved iteratively to identify multiple configurations of the system sizing.

At block 1300: for each of at least one of the one or more configurations of the system sizing, determining a respective complex structure of the energy system based on a pre-defined complex model for each one of the plurality of components and on the abstract structure, and determining a performance of the respective complex structure of the energy system based on a set of requirements associated with the energy system.

The complex model for each one of the plurality of components comprises the at least one technical parameter characterizing the respective component.

For example, each of the components 91-93 of the energy system 90 may comprise a pre-defined complex model, and a complex structure of the energy system 90 can be determined based on the corresponding complex model of each of the components 91-93. For example, the complex structure of the energy system 90 can be built using the corresponding complex model of the components 91-93. Further, the energy exchange lines 98 may also comprise a pre-defined complex model. I.e., the complex structure of the energy system 90 may be built by connecting the complex model of individual components 91-93 via the complex model of the energy exchange lines 98. Further, the technical parameters of each component 91-93 of the energy system 90 may be set/determined according to the respective configuration of the system sizing determined at block 1200.

According to various examples, the complex model may be a model that contains multiple technical parameters of the realistic component. For example, the complex model of a generator may comprise at least one of the following technical parameters: copper size, winding design, power for the magnet, voltage, a power factor, fuel efficiency curve, minimum on time, ramping speed, synchronization time, capital costs, operating costs.

According to this disclosure, the set of requirements associated with the energy system may comprise at least one of balance of powers/allowed blackouts, availability of required operating reserve, availability of grid forming power for grid stability, and availability of redundant energy sources for critical loads.

Optionally or additionally, the at least one configuration of the system sizing may be selected, based on pre-defined criteria, from the determined (at block 1200) one or more configurations of the system sizing.

For example, such criteria may comprise nominal values of parameters associated with the corresponding components. For example, one of the determined efficiency terms of a generator is 95%. However, there is no such generator which can achieve an efficiency of 95% and thereby the 95% efficiency cannot be selected.

Alternatively or optionally, the at least one configuration of the system sizing may be selected by an engineer or be determined automatically using a pre-defined optimization criterion.

Optionally or additionally, said determining of the performance of the respective complex structure of the energy system may comprise: performing a simulation of at least one behavior of the complex structure of the energy system, and determining the performance based on a comparison between a result of the simulation and the set of requirements associated with the energy system.

For example, by performing the simulation, behaviors of the respective complex structure of the energy system can me simulated and the fitness of the respective complex structure can be evaluated.

Optionally or additionally, the method 1000 may further comprises: adjusting at least one technical parameter associated with at least one component of the plurality of components based on the performance, performing a further simulation of the at least one behavior of the complex structure of the energy system based on the at least one adjusted technical parameter, and determining a further performance based on a further comparison between a further result of the further simulation and the set of requirements associated with the energy system.

For example, the at least one technical parameter associated with at least one component of the plurality of components may be adjusted automatically or manually.

At block 1400: designing the energy system based on respective performances determined for the at least one of the one or more configurations of the system sizing.

According to various examples, said designing of the energy system may comprise: determining, among the one or more configurations of the system sizing, the configuration of the system sizing with which the best performance is achieved, and designing the energy system using the determined configuration of the system sizing.

According to various examples, the method 1000 may optionally or additionally further comprise determining, for each of the plurality of components, the pre-defined abstract model based on the respective pre-defined complex model. In some examples, said determining of the pre-defined abstract model may comprise: determining, for each of the at least one abstract parameter, a mapping which maps the respective abstract parameter to at least one of the at least one technical parameter, and determining the pre-defined abstract model based on the determined mapping for each of the at least one abstract parameter. Further, said determining of the respective complex structure (at block 1300) of the energy system may comprise: converting the abstract model of each one of the plurality of components into the respective complex model based on the respective mapping, and reusing component connections from the abstract model.

According to various examples, such a mapping may comprise at least one of a transfer function, a look-up table, a mapping diagram and so on.

For example, the individual pre-defined abstract model can be derived from the corresponding complex model and the individual complex model may be constructed manually by an engineer. For instance, a generator may be characterized/represented by a set of technical parameters (e.g., fuel efficiency curve, minimum on time, ramping speed, synchronization time, capital costs, operating costs, and so on) in a complex model. These technical parameters contain detail necessary for the simulation of the component in a complex structure of an energy system.

For each individual component, it is possible that the abstract parameters may be a subset of the technical parameters. It is also possible that "n" abstract parameters describe "m" technical parameters, in which n is less than m. For example, the technical parameters to capture fuel efficiency may include a nonlinear curve describing the relationship between fuel consumption and electrical production as well as a derating factor, and time-based efficiency degradations, while the abstract parameter is a constant efficiency term. I.e., the abstract parameters may be related to the technical parameters but may be not subsets of the technical parameters.

According to this disclosure, the set of requirements associated with the abstract structure of the energy system may be the same as the set of requirements associated with the energy system. Alternatively, the set of requirements associated with the abstract structure of the energy system may be not a subset of those associated with the energy system but may be an overlapping set.

The method 1000 integrates the determination of configurations of a system sizing of an energy system based on an abstract structure and the determination of an appropriate complex structure of the energy system based on the determined configurations of the system sizing into one workflow. The appropriate complex structure of the energy system can be designed in a two-step process including a preliminary estimate of possible configurations of the system sizing and a fine-tuning of technical parameters of individual components of the energy system. Accordingly, the energy system can be efficiently and precisely designed. Further, for each of the abstract parameters associated with an individual component, by utilizing a mapping that maps the respective abstract parameter to at least one of the technical parameters, the respective abstract parameter and the corresponding technical parameter can be determined automatically, if either the abstract model of or the complex model of an individual component is known. Such a mapping can further facilitate efficiently and precisely designing the energy system. The techniques disclosed herein can facilitate/improve/optimize energy systems' technical, economic, and environmental performances.

Although the disclosure has been shown and described with respect to certain preferred embodiments, equivalents and modifications will occur to others skilled in the art upon the reading and understanding of the specification. The present disclosure includes all such equivalents and modifications and is limited only by the scope of the appended claims.

For example, the techniques disclosed herein may particularly facilitate designing a DER system in which often smaller generation units are located on the consumer's side of the meter. Exemplary DER may include rooftop solar photovoltaic units, wind generating units, battery storage, batteries in electric vehicles used to export power back to the grid, combined heat and power units, or tri-generation units that also utilize waste heat to provide cooling, biomass generators which are fuelled with waste gas or industrial and agricultural by-products, open and closed cycle gas turbines, reciprocating engines (diesel, oil), hydro and mini-hydro schemes, fuel cells. The techniques disclosed herein can maximize the value of energy asset investment, reduce the Levelized cost of electricity while optimizing carbon dioxide reductions, and simulate how DER technologies, combined with varying loads as well as electric vehicle charging.

## Claims

1. A computer-implemented method (1000) for designing an energy system (90) comprising a plurality of components (91-93), the method comprising:
- determining (1100) an abstract structure of the energy system (90) based on a pre-defined abstract model for each one of the plurality of components (91-93), wherein the abstract model for each one of the plurality of components (91-93) comprises at least one abstract parameter with respect to at least one technical parameter characterizing the respective component;
- determining (1200) one or more configurations of a system sizing associated with the energy system (90), wherein each one of the one or more configurations of the system sizing is determined based on the abstract structure and on a set of requirements associated with the abstract structure of the energy system (90);
- for each of at least one of the one or more configurations of the system sizing (1300):
- determining a respective complex structure of the energy system (90) based on a pre-defined complex model for each one of the plurality of components (91-93) and on the abstract structure, wherein the complex model for each one of the plurality of components (91-93) comprises the at least one technical parameter characterizing the respective component;
- determining a performance of the respective complex structure of the energy system (90) based on a set of requirements associated with the energy system (90) ;
- designing (1400) the energy system (90) based on respective performances determined for the at least one of the one or more configurations of the system sizing.

2. The computer-implemented method of claim 1, further comprising:
- determining, for each of the plurality of components (91-93), the pre-defined abstract model based on the respective pre-defined complex model.

3. The computer-implemented method of claim 2, wherein said determining of the pre-defined abstract model comprises:
- determining, for each of the at least one abstract parameter, a mapping which maps the respective abstract parameter to at least one of the at least one technical parameter;
- determining the pre-defined abstract model based on the determined mapping for each of the at least one abstract parameter.

4. The computer-implemented method of claim 3, wherein said determining of the complex structure of the energy system (90) comprises:
- converting the abstract model of each one of the plurality of components (91-93) into the respective complex model based on the respective mapping;
- reusing component connections from the abstract model.

5. The computer-implemented method of any one of the preceding claims, wherein said determining of each of the one or more configurations of the system sizing comprises:
- determining an objective function with respect to the respective abstract parameters of corresponding abstract models;
- determining, using an optimization approach, the respective configuration of the system sizing based on the respective objective function and on the set of requirements associated with the abstract structure of the energy system (90).

6. The computer-implemented method of any one of the preceding claims, further comprising:
- selecting, based on pre-defined criteria, the at least one configuration of the system sizing from the determined one or more configurations of the system sizing.

7. The computer-implemented method of any one of the preceding claims, wherein said determining of the performance of the respective complex structure of the energy system (90) comprises:
- performing a simulation of at least one behavior of the complex structure of the energy system (90);
- determining the performance based on a comparison between a result of the simulation and the set of requirements associated with the energy system (90).

8. The computer-implemented method of claim 7, further comprising:
- adjusting at least one technical parameter associated with at least one component of the plurality of components (91-93) based on the performance;
- performing a further simulation of the at least one behavior of the complex structure of the energy system (90) based on the at least one adjusted technical parameter;
- determining a further performance based on a further comparison between a further result of the further simulation and the set of requirements associated with the energy system (90).

9. The computer-implemented method of any one of the preceding claims, wherein said designing of the energy system (90) comprises:
- determining, among the one or more configurations of the system sizing, the configuration of the system sizing with which the best performance is achieved;
- designing the energy system (90) using the determined configuration of the system sizing.

10. A computing device (9000), the device (9000) comprising a processor (9020) and a memory (9030), wherein upon loading and executing program code from the memory (9030), the processor (9020) is configured to perform the method (1000) of any one of the preceding claims.

11. A computer program product or a computer program or a computer-readable storage medium includes program code being executed by at least one processor (9020), wherein upon executing the program code, the at least one processor (9020) is configured to perform the method according to any one of claims 1 to 9.
